# EUROPEAN PATENT APPLICATION

(11) **EP 4 640 854 A1**
(43) Date of publication of application: **29.10.2025**
(21) Application number: 23907391.9
(22) Date of filing: 03.11.2023
(51) Int. Cl.: C21D 10/00, C21D 8/12, H01F 1/147, H01S 3/067, H01S 3/08, H01S 3/16

(54) **GRAIN-ORIENTED ELECTRICAL STEEL SHEET AND METHOD FOR MANUFACTURING SAME**

(30) Priority: 21.12.2022 KR 20220180158
(71) Applicant: POSCO Co., Ltd, Pohang-si, Gyeongsangbuk-do 37859 (KR)
(72) Inventor: KWON, Ohyeoul, Pohang-si, Gyeongsangbuk-do 37859 (KR); KIM, Woosin, Pohang-si, Gyeongsangbuk-do 37859 (KR)
(74) Representative: Meissner Bolte Partnerschaft mbB
(86) International application number: PCT/KR2023/017460
(87) International publication number: WO 2024/136105

(57) **Abstract**

A grain-oriented electrical steel sheet according to an embodiment of the present disclosure includes: an electrical steel sheet substrate; and an insulating film layer that is disposed on the electrical steel sheet substrate. At least one deformation portion having a linear shape is formed on a surface of the electrical steel sheet substrate, and a natural corrosion potential value of the electrical steel sheet is -350 mV or more.

## Description

### [Technical Field]

An embodiment of the present disclosure relates to a grain-oriented electrical steel sheet and a manufacturing method for the same. More specifically, the embodiment of the present disclosure relates to a method for manufacturing a grain-oriented electrical steel sheet having an excellent iron loss characteristic while preventing surface damage by irradiating overlapping lasers having different wavelengths to a surface of an electrical steel sheet on which secondary recrystallization occurs.

### [Background Art]

A grain-oriented electrical steel sheet has an excellent magnetic characteristic to be used as an iron core material of a transformer. In the grain-oriented electrical steel sheet, a Goss texture recrystallized in an orientation of {110} <001> through a unique rolling and annealing process that only a manufacturing process of the electrical steel sheet has is formed throughout the steel sheet.

In order to cope with climate change, the world is strengthening calculation grade of greenhouse gas emission day by day. A factor affecting the calculation grade of the greenhouse gas emission in an iron core of the transformer is related to improvement of efficiency when the electrical steel sheet is used. In efficiency of the iron core of the transformer, an iron loss and a magnetic flux density (i.e., magnetic characteristics) of the electrical steel sheet are acting as important factors.

Because the magnetic flux density of the electrical steel sheet is higher as a degree to which a crystal axis that is easy to magnetize is gathered in a crystal structure that is crystal orientation is higher, the manufacturing process of the electrical steel sheet may significantly affect the magnetic flux density.

A W17/50 [W/kg] value measured when a magnetic field having a frequency of 50 Hz is applied at a maximum magnetic flux density of 1.7 T is called a guaranteed iron loss value of the iron core material, and the value is generally used as a measure of the iron loss of the electrical steel sheet. However, when the transformer is designed, a W15/50 [W/kg] value measured when a magnetic field with a frequency of 50 Hz is applied at a maximum magnetic flux density of 1.5 T that is lower than the maximum magnetic flux density of 1.7 T is also used. The lower the iron loss value, the better the efficiency of the transformer.

Therefore, the electrical steel sheet with a high magnetic flux density and a low iron loss may be used as an iron core of the transformer with an excellent efficiency. The iron loss is evaluated as a more important indicator because a process technology for securing the high magnetic flux density through upward leveling of the manufacturing process of the electrical steel sheet has been developed to a level that may support an efficiency of the transformer.

The iron loss is divided into an eddy current loss and a hysteresis loss and the hysteresis loss tends to decrease if the magnetic flux density is high, so that the eddy current loss occupies an important position in controlling an overall iron loss in a grain-oriented electrical steel sheet. **The** eddy current loss among the iron loss is divided into a classical eddy current loss and an anomalous eddy current loss, and the classical eddy current loss is proportional to a thickness of the steel sheet so that the classical eddy current loss is decreased as the steel sheet is thinner. Therefore, controlling the anomalous eddy current loss is becoming an important technology for reducing the iron loss.

**The** eddy current loss among the iron loss may be reduced as a magnetic wall spacing of a 180° magnetic domain in a rolling direction becomes narrower, so that the iron loss is reduced by refining a magnetic domain of the electrical steel sheet.

Refining the magnetic domain in the electrical steel sheet means a process of separating the magnetic domain into multiple magnetic domains by applying a physical stimulus to a crystal grain with one magnetic characteristic. A method for refining the magnetic domain may include laser irradiation, electron beam irradiation, plasma treatment, etching, roll pressing, or the like. Depending on whether an effect of refinement of the magnetic domain is maintained even after refinement treatment of the magnetic domain is performed and then stress relief annealing (SRA) is performed, refinement of the magnetic domain is divided into refinement of a permanent magnetic domain and refinement of a temporary magnetic domain.

**In** a series of manufacturing process of the electrical steel sheet, a refinement process of the magnetic domain may be performed before a decarbonization process or after insulation coating.

It takes a lot of time for transportation of a product or the like until the electrical steel sheet produced is shipped in a coil form to be processed into a final iron core. During a period of the transportation or during the electrical steel sheet is processed into the iron core, there is a possibility that a portion physically stimulated for the refinement of the magnetic domain in the electrical steel sheet may be corroded.

Occurring corrosion in a portion of a surface of the electrical steel sheet that is physically stimulated means that an insulating film on the surface is peeled off so that a substrate of the electrical steel sheet is exposed. If the electrical steel sheet is stacked and used as the iron core, the insulating film formed on the surface of the electrical steel sheet is destroyed so that upper and lower stacked iron cores become electrically conductive. In this case, there is even a possibility that the transformer may explode.

Therefore, even if a physical stimulus is applied to the surface of the electrical steel sheet to refine the magnetic domain, it is necessary to apply the stimulus within a range that does not damage the insulating film.

### [Disclosure]

### [Technical Problem]

An embodiment of the present disclosure relates to a grain-oriented electrical steel sheet and a manufacturing method for the same. More specifically, the embodiment of the present disclosure relates to a manufacturing method for a grain-oriented electrical steel sheet having an excellent iron loss characteristic while preventing surface damage by irradiating overlapping lasers having different wavelengths to a surface of an electrical steel sheet on which secondary recrystallization occurs.

### [Technical Solution]

A method for refining a magnetic domain of a grain-oriented electrical steel sheet according to an embodiment of the present disclosure includes: forming a deformation portion by irradiating overlapping laser beams to a surface of the electrical steel sheet. The overlapping laser beams includes a first beam spot formed by irradiating a first laser beam with a first wavelength and a second beam spot formed by irradiating a second laser beam with a second wavelength and the overlapping laser beams are formed by controlling the first beam spot so that some or all of the first beam spot are disposed inside the second beam spot.

A first laser of the overlapping laser beams may be a short-wavelength laser and a second laser may be a long-wavelength laser having a wavelength longer than a wavelength of the short-wavelength laser.

The overlapping laser beams in which that the first laser and the second laser simultaneously overlaps may be irradiated to the surface of the electrical steel sheet with second recrystallization in a direction perpendicular or inclined to a rolling direction to form a deformation portion having a linear shape.

A beam shape of each of the first laser and the second laser may be one of an elliptical shape and a circular shape.

The first laser may be one of an optical fiber laser, a YAG laser, and a disk laser, and the second laser may be a CO₂ laser.

A beam spot of the optical fiber laser that is the first laser may have a width of 10 to 200 µm and a length of less than or equal to a length of a beam spot of the CO₂ laser and may have the elliptical shape or the circular shape..

A beam spot of the CO₂ laser that is the second laser may have a width of 100 to 400 µm and a length of 0.4 to 20 mm and may have the elliptical shape.

An irradiation interval of the overlapping laser beams may be 2 to 10 mm and a scanning speed of the overlapping laser beams may be 0.1 to 300 m/sec.

An inclination direction of the overlapping laser beams may be ±10° or less.

An output of the optical fiber laser that is the first laser may be 10 to 150 W, an output of the YAG laser may be 10 to 250 W, and an output of the CO₂ laser that is the second laser may be 200 to 500 W.

A grain-oriented electrical steel sheet according to an embodiment of the present disclosure includes: an electrical steel sheet substrate; and an insulating film layer that is disposed on the electrical steel sheet substrate. At least one deformation portion having a linear shape is formed on a surface of the electrical steel sheet substrate, and a natural corrosion potential value of the electrical steel sheet is -350 mV or more.

A glass film layer may be formed between the electrical steel sheet substrate and the insulating film layer.

The natural corrosion potential value of the electric steel sheet may be - 50 to -300 mV.

A re-solidification layer may be formed on a surface of the insulating film layer.

A thickness of the re-solidification layer may be within 20% of a cross-sectional thickness of the insulating film layer.

A W15/50 iron loss improvement rate of the electrical steel sheet may be 6% or more, and a W17/50 iron loss improvement rate of the electrical steel sheet may be 9% or more.

A grain-oriented electrical steel sheet according to another embodiment of the present disclosure includes: an electrical steel sheet substrate; and an insulating film layer that is disposed on the electrical steel sheet substrate. At least one deformation portion having a linear shape is formed on a surface of the electrical steel sheet, and a re-solidification layer is formed on a surface of the insulating film layer above the deformation portion having the linear shape.

A glass film layer may be formed between the electrical steel sheet substrate and the insulating film layer.

A thickness of the insulating film layer above the deformation portion having the linear shape may be 60% or more of a thickness of the insulating film layer above a region where the deformation portion is not formed.

The re-solidification layer may include silicon oxide as a primary component and the insulating film layer may include phosphate or colloidal silica as primary components. A thickness of the re-solidification layer may be within 20% of a cross-sectional thickness of the insulating film layer.

### [Advantageous Effects]

An embodiment of the present disclosure may perform optimal refinement of a magnetic domain using overlapping lasers having different wavelengths to further improve magnetism while at the same time sufficiently suppressing damage to a surface of a steel sheet.

An embodiment of the present disclosure may easily increase an average output using a long-wavelength laser, may secure reliability of a processing line, and at the same time may irradiate a short-wavelength laser together to form the magnetic domain to a minimum so that it effectively improves magnetism.

**If** only a CO₂ laser is used in improving an iron loss of a grain-oriented electrical steel sheet, an improvement effect of an iron loss characteristic may vary depending on a thickness of an insulating film, but the present disclosure may suppress magnetic deviation due to a film while maintaining an improvement effect of an iron loss by overlapping heterogeneous lasers.

A method for refining a magnetic domain of the grain-oriented electrical steel sheet according to an embodiment of the present disclosure may use a CO₂ laser as a long-wavelength laser to stably preheat the steel sheet without destroying insulating film layers, and may use an optical fiber laser as a short-wavelength laser to induce a residual stress due to thermoelastic deformation of the steel sheet with a width exactly as necessary for forming a reflux magnetic domain without considering a thickness of the insulating film layer so that it enables precise refinement of the magnetic domain.

A method for refining the magnetic domain of the grain-oriented electrical steel sheet according to another embodiment of the present disclosure may simultaneously irradiate the lasers with different wavelengths in a state in the lasers overlap on a surface of the steel sheet on which secondary recrystallization has been completed to maximize thermal shock in a thickness direction even under a low laser output condition so that it provides a directional magnetic domain refinement product having an excellent iron loss under low and high magnetic fields.

### [Description of the Drawings]

FIG. 1 is a graph showing a light absorption rate of a steel sheet according to a wavelength of a laser.
FIG. 2 is a schematic diagram illustrating a concept of refinement of a magnetic domain forming a deformation portion using overlapping lasers having different wavelengths according to an embodiment of the present disclosure.
FIG. 3 is a schematic diagram illustrating a case in which beam spots of overlapping lasers having different wavelengths are scanned on the steel sheet according to an embodiment of the present disclosure.
FIG. 4 is a schematic diagram showing an energy density when the beam spots of the overlapping lasers with different wavelengths are scanned on the steel sheet according to an embodiment of the present disclosure.
FIG. 5 is a view illustrating a working electrode of a device for measuring a natural corrosion potential value of the steel sheet according to an embodiment of the present disclosure.
FIG. 6 is a view illustrating the device for measuring the natural corrosion potential value of the steel sheet according to an embodiment of the present disclosure.

### [Mode for Invention]

Terms such as "first", "second", and "third" are used herein to describe various portions, components, regions, layers, and/or sections, but are not limited thereto. The terms are used only to distinguish one portion, component, region, layer, or section from another portion, component, region, layer, or section. Accordingly, a first portion, component, region, layer, or section described below may be referred to as a second portion, component, region, layer, or section within a scope that does not depart from a scope of the present disclosure.

A technical term used herein is intended only to refer to a specific embodiment, and is not intended to limit the present disclosure. Singular forms used herein also include plural forms unless phrases clearly indicate an opposite meaning. A term "include" used in the specification specifies a specific characteristic, region, integer, step, operation, element, and/or component, and does not exclude presence or addition of another characteristic, region, integer, step, operation, element, and/or component.

When it is said that a portion is "on" or "above" another portion, the portion may be disposed directly on or above the other portion, or another portion may be interposed therebetween. In contrast, when a portion is said to be "directly above" another portion, no other portion is interposed therebetween.

Although not otherwise defined, all terms used herein, including a technical term and a scientific term, have the same meanings as those generally understood by a person of ordinary skill in the art to which the present disclosure belongs. Terms defined in a dictionary commonly used are additionally interpreted to have a meaning consistent with the relevant technical literature and the presently disclosed contents, and are not interpreted in an ideal or very formal sense unless otherwise defined.

Hereinafter, an embodiment of the present disclosure will be described in detail so that a person of ordinary skill in the art to which the present disclosure belongs may easily implement the present disclosure. The present disclosure may be modified in various ways, all without departing from the spirit or scope of the present disclosure.

The embodiment of the present disclosure may provide an excellent iron loss characteristic while preventing surface damage by irradiating overlapping lasers with different wavelengths to a surface of an electrical steel sheet.

A method for refining a magnetic domain using a laser is preferred as one of methods for improving an iron loss in a grain-oriented electrical steel sheet.

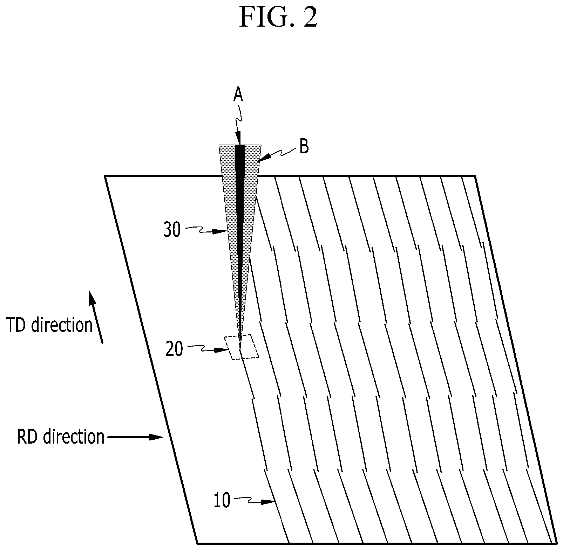

As illustrated in FIG. 2, a process of refining the magnetic domain of the grain-oriented electrical steel sheet may form a deformation portion 10 or a deformation portion having a linear shape by irradiating a laser along a direction perpendicular or inclined to a rolling direction (e.g., an RD direction) of the steel sheet (that is, a width direction (e.g., a **TD** direction) of the steel sheet) over an entire electrical steel sheet. The deformation portion having the linear shape may include not only a solid line but also an intermittent connection such as a dotted line or a broken line, and may include all deformation portions that form a substantially linear shape including a microscopically zigzag shape but a macroscopically straight-line shape.

Formation of the deformation portion in the steel sheet by the laser may mean deformation of a crystal lattice caused by thermal shock by irradiation of the laser, and the deformation of the crystal lattice may be formed during a process of rapidly heating and immediately cooling the steel sheet locally by the laser. **In** this case, a heating speed of the steel sheet may be proportional to an energy density (e.g., a power density) per unit time of the laser.

However, because the deformation of the crystal lattice due to the thermal shock during the irradiation of the laser is increased as a total irradiation energy of the laser is increased, more heat sources than necessary for forming a reflux magnetic domain may diffuse to the surroundings so that magnetic deformation is increased if an energy greater than or equal to a size required for refinement of the magnetic domain is irradiated to the steel sheet. Therefore, the deformation of the crystal lattice due to the thermal shock during the irradiation of the laser may require only a lattice deformation energy exactly as necessary for forming the reflux magnetic domain, and it is desirable to irradiate an incident energy of the laser to a narrow area for a shorter time to suppress the heat diffusion.

An interaction condition between a beam of the laser and the steel sheet may be affected by a characteristic of the laser and an absorption rate of the beam of the laser for the steel sheet. **The** absorption rate of the beam of the laser may be affected by a surface roughness of the steel sheet, a temperature of the steel sheet, an absorption characteristic of a film on a surface of the steel sheet, and a wavelength of the laser. However, when a manufacturing condition of the grain-oriented electrical steel sheet forming the film is constant, the surface roughness of the steel sheet, the temperature of the steel sheet, and the absorption characteristic of the film on the surface of the steel sheet may be constant, and in this case, an absorption rate of the steel sheet of the laser beam may depend on the wavelength of the laser.

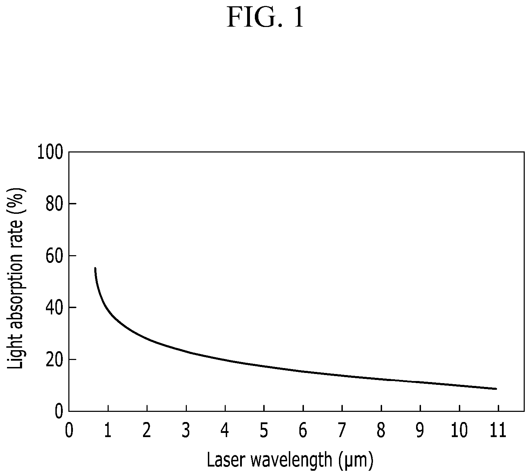

**That** is, when the manufacturing condition of the steel sheet is constant, the absorption rate of the laser may be affected by the wavelength of the laser. As shown in FIG. 1, the absorption rate of the laser of the steel sheet may be approximately 35 to 40% if the wavelength is a short wavelength (e.g., 1.06 µm for a YAG or fiber laser), while the absorption rate of the laser of the steel sheet is relatively low at approximately 5 to 10% if the wavelength is a long wavelength (e.g., 10.6 µm for a CO₂ laser).

**It** may be more efficient to use a short-wavelength laser than to use a long-wavelength laser to secure a stable iron loss characteristic in a process of refining the magnetic domain of the grain-oriented electrical steel sheet using the laser.

An insulating film including phosphate and silica with a thickness of several to several tens of µm as primary components may be formed on a surface of the electrical steel sheet that is a treatment object of refinement of the magnetic domain. **The** film may have relatively little absorption of the laser beam for the short-wavelength laser (e.g., a YAG or fiber laser with 1.06 µm), but may have relatively great absorption of the laser beam for the long-wavelength laser (e.g., a CO₂ laser with 10.6 µm). As a result, a thickness of the insulating film should be considered in the long-wavelength laser, but the thickness of the insulating film may be less considered in the short-wavelength laser than in the long-wavelength laser.

As described above, the short-wavelength laser and the long-wavelength laser may have different characteristics. Therefore, if the short-wavelength laser and the long-wavelength laser are simultaneously and overlappingly used, an advantage of each laser applied to the refinement of the magnetic domain may be preferentially exerted without a side effect so that a mutual synergistic effect is induced.

**The** use of overlapping the heterogeneous lasers may mean that two or more lasers are used for the laser beam irradiated on a surface of the steel sheet and some or all of a spot of one laser beam formed on the surface of the steel sheet are disposed within a spot of the other laser beam. Therefore, in an embodiment of the present disclosure, the overlapping lasers having different wavelengths may include not only those in which the spot of one laser beam is completely covered and overlapped with the spot of the other laser beam but also those in which the spot of one laser beam is partially overlapped with the spot of the other laser beam.

As shown in FIGS. 2 to 4, in overlapping lasers 30 used for the refinement of the magnetic domain according to an embodiment of the present disclosure, the short-wavelength laser may be called a first laser A that is a main laser, and the long-wavelength laser may be called a second laser B that is an auxiliary laser and is a laser having a longer wavelength than that of the first laser.

The first laser A that is the short-wavelength laser may use a laser with a relatively short wavelength, and for example, the first laser A may be an optical fiber laser (e.g., an Er-fiber laser, a Yb-fiber laser, or a Tm-fiber laser), a YAG laser (e.g. an Nd:YAG laser or a Yb:YAG laser), a ruby laser, a sapphire laser, or the like. In addition, a disk laser with 1.03 µm, a diode laser with 0.808 to 0.980 µm, or a UV laser with 0.150 to 0.355 µm may be used as the first laser.

A laser with a relatively longer wavelength than a short wavelength may be used as the second laser that is the long-wavelength laser. For example, the CO₂ laser may be the second laser. However, if the UV laser with 0.150 to 0.355 µm is used as the first laser that is the short-wavelength laser, any laser with a longer wavelength than that of the first laser may be used as the second laser. For example, if the UV laser with 0.150 to 0.355 µm is used as the first laser, the YAG laser may be used as the second laser.

Hereinafter, a method for refining the magnetic domain using the overlapping lasers 30 will be described in more detail when the optical fiber laser is used as the first laser with the short wavelength and the CO₂ laser is used as the second laser with the long wavelength.

Because the optical fiber laser that is the first laser A uses a laser wavelength of the short wavelength with a relatively high laser absorption rate for the steel sheet, it is possible to irradiate an incident energy that causes a residual stress due to lattice deformation and thermoelastic deformation exactly as necessary for forming the reflux magnetic domain to a narrow area for a shorter time. Additionally, because the optical fiber laser used as the first laser A has a narrow range of the incident energy, the optical fiber laser may suppress heat diffusion to the surroundings to minimize unnecessary thermal deformation.

**The** CO₂ laser that is the second laser B may use an average output of a high output of several hundred watts to several kilowatts or more depending on a speed of the steel sheet, and may easily induce thermoelastic deformation in an irradiated portion of the steel sheet. **In** addition, the CO₂ laser that is the second laser B may have a high absorption rate for an insulating film made of phosphate and silica to stably pass through film layers. Therefore, the CO₂ laser that is the second laser B may stably induce thermoelastic deformation of the steel sheet without destroying insulating film layers, so that it is suitable for serving as a kind of preheating. However, because the CO₂ laser that is the second laser B has a low laser absorption rate for the steel sheet, the laser that induces thermoelastic deformation of the steel sheet but does not cause permanent deformation of the steel sheet may be irradiated.

**That** is, if the long-wavelength laser such as the CO₂ laser that is the second laser B is used, a portion that provides thermal shock to the steel sheet may be too wide so that refinement of the magnetic domain does not occur well. Therefore, the optical fiber laser with a relatively short wavelength may be used as the first laser to be used as a main laser for the refinement of the magnetic domain, and the CO₂ laser with a relatively long wavelength may be used as an auxiliary laser that plays a kind of preheating role to induce thermoelastic deformation of the steel sheet.

A reason why the optical fiber laser with a short wavelength is selected as the first laser A to be used as the main laser for the refinement of the magnetic domain may be that a laser absorption rate on a surface of the steel sheet is high so that a strong compression stress portion is formed in a laser irradiation portion and a lancet magnetic domain (e.g., the reflux magnetic domain) is easily formed to reduce magnetoelastic energy in the compression stress portion.

**In** this case, a 180° magnetic domain (e.g., an opposite magnetic pole of the lancet magnetic domain) may be formed in a surface direction by magnetoelastic energy due to the refinement of the magnetic domain, and a 90° magnetic domain may be formed in a sheet thickness direction to reduce the magnetoelastic energy. **Thus,** an interval between magnetic domains may be narrowed so that an abnormal eddy current loss is ultimately reduced.

As described above, a method for refining the magnetic domain according to an embodiment of the present disclosure may use the optical fiber laser with the short wavelength that is the first laser to induce a residual stress due to thermoelastic deformation of the steel sheet with a width exactly as necessary for forming the reflux magnetic domain so that it enables precise refinement of the magnetic domain. **In** addition, the method may use the CO₂ laser with the long wavelength that is the second laser to stably preheat the steel sheet without destroying film layers.

**In** addition, the optical fiber laser with the short wavelength that is the first laser A may have an advantage of being able to form a small final beam width and improving a laser absorption rate within the steel sheet, but may have a relatively short depth of field. However, the CO₂ laser with the long wavelength that is the second laser B may have a wide final beam width and a relatively low laser absorption rate within the steel sheet, but may have an advantage of having a deep depth of field. Therefore, if the two laser beams are simultaneously overlapped to be irradiated, the laser absorption rate within the steel sheet may be further increased.

In this case, a beam spot of the optical fiber laser with the short wavelength that is the first laser A irradiated on a surface of the steel sheet may have a shape close to a circular shape, and a diameter thereof may be 10 to 200 µm. A width (e.g., a length in the RD direction in FIG. 2) of the beam spot of the optical fiber laser may be 10 to 200 µm and a length (e.g., a length in the **TD** direction in FIG. 2) of the beam spot may be less than or equal to or greater than or equal to a length of a beam spot of the CO₂ laser that is the second laser B.

If a beam width of the optical fiber laser that is the first laser A is reduced to less than 10 µm, deterioration of a magnetic flux density and deterioration of an iron loss may appear because an energy density is accumulated in a narrow area, and there may be a problem in which an optical system structure is complicated. If the beam width of the optical fiber laser that is the first laser A is increased to 200 µm or more, a thermal effect in a length direction of the steel sheet may be increased so that the magnetic flux density is decreased.

The beam spot of the CO₂ laser that is the second laser B with the long wavelength irradiated on the surface of the steel sheet may have an elliptical shape in which a beam width (e.g., a length in the RD direction in FIG. 2) thereof is 100 to 400 µm and a beam length (e.g., a length in the TD direction in FIG. 2) thereof is 0.4 to 20 mm. The beam spot of the CO₂ laser with the long wavelength may have a circular shape in which a radius thereof is 100 µm or more.

In order to form the beam width of the CO₂ laser that is the second laser B within 100 µm, a mirror optical system such as the CO₂ laser may become complicated, and if the beam width of the CO₂ laser is increased to 400 µm or more, a thermal effect in a length direction of the steel sheet may be increased so that the magnetic flux density is decreased.

A reason why a size of the beam spot of the CO₂ laser with the long wavelength that is the second laser B is limited may be that a range in which a thermal deformation effect of the laser beam acting on the steel sheet is maintained when the laser is scanned at a high speed on a surface of the steel sheet moving at a high speed is considered.

A case in which the heterogeneous lasers are simultaneously and overlappingly used according to an embodiment of the present disclosure will be described in more detail.

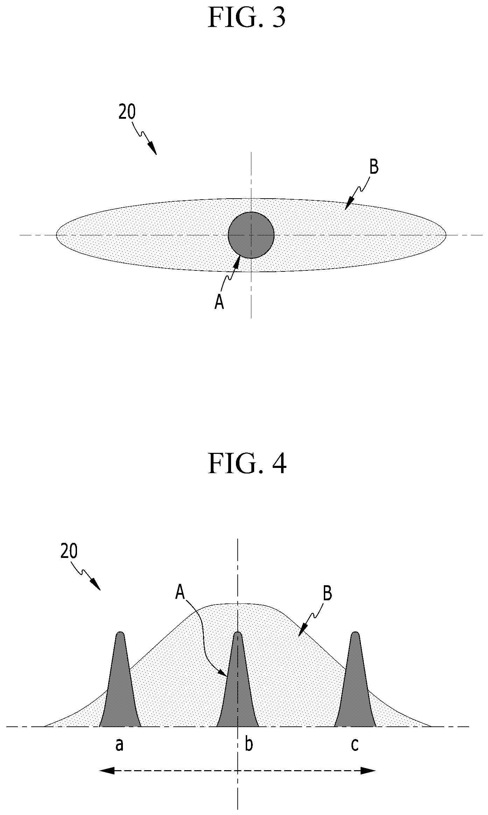

Using the optical fiber laser that is the first laser A and the CO₂ laser that is the second laser B in the overlapping manner as shown in FIGS. 2 to 4 may mean that the first laser A with a small beam spot is controlled to be disposed within a range of a second laser beam B with a large beam spot while being irradiated to the surface of the steel sheet. That is, that the beams are overlapped may mean that an optical fiber laser beam that is the first laser A is completely disposed anywhere within a range of a CO₂ laser beam that is the second laser B having a large beam spot in a plan view of heterogeneous laser beam spots 20 irradiated on the surface of the steel sheet of FIG. 3 and the optical fiber laser beam that is the first laser A is partially disposed within the range of the CO₂ laser beam that is the second laser B in the plan view of the heterogeneous laser beam spots 20 irradiated on the surface of the steel sheet of FIG. 3.

As shown in FIG. 4, a Gaussian shape (b) among Gaussian shapes (a, b, and c) of a first laser beam A with a short wavelength may be simultaneously disposed at a position in which intensity of the second laser beam B with a long wavelength is high, and that the Gaussian shape (b) among the Gaussian shapes (a, b, and c) of the first laser beam A with the short wavelength is simultaneously disposed at a position in which the intensity of the second laser beam B with the long wavelength is high may mean that overlapping lasers 20 with different wavelengths irradiated on the surface of the steel sheet are simultaneously overlapped in the present disclosure.

In an oscillation mode of the laser beam used in an embodiment of the present disclosure, both the first laser A and the second laser B may be a continuous wave laser that continuously generates laser light, or may be a pulse laser.

In a quality of the laser beam, both the first laser A and the second laser B may use a Gaussian mode of **TEM** 00 or a multi-transverse mode of TEM0i.

However, because overlapping laser beams 20 with different wavelengths irradiated on the surface of the steel sheet according to an embodiment of the present disclosure may maximize thermal shock in a thickness direction while minimizing a thermal influence in a length direction of the steel sheet, a beam shape or a beam quality of each laser may not be specifically limited.

An output of the optical fiber laser that is the first laser A may be 10 to 150 W, and an output of the CO₂ laser that is the second laser B may be 200 to 500 W. An output of the YAG laser that is the first laser A may be 10 to 150 W. An output range of each laser may indicate an output condition of the laser when the steel sheet is progressed at a speed of 15 mpm, and an output value of the laser may be optimally controlled according to a progress speed of the steel sheet.

An interval when laser beams 30 in which the first laser A and the second laser B overlap are irradiated on the surface of the steel sheet may be 2 to 10 mm, an angle thereof inclined to the rolling direction may be ±10° or less, and a scanning speed thereof may be 0.1 to 300 m/sec.

**In** this case, the electrical steel sheet on which secondary recrystallization occurs may be used.

**If** an irradiation interval of the overlapping laser beams 20 irradiated on the surface of the steel sheet is too narrow to be less than 2 mm, an influence of a heat-affected portion may be increased so that the magnetic flux density and the iron loss become inferior, and if the irradiation interval is 10 mm or more, a heat shock effect for securing a refinement effect of the magnetic domain may be decreased so that it is difficult to achieve the effect.

When the overlapping laser beams 20 are irradiated on the surface of the steel sheet, the overlapping laser beams may be irradiated in a direction perpendicular or inclined to the rolling direction of the steel sheet, and an angle thereof inclined to the rolling direction may be ±10° or less. **If** the overlapping laser beams are irradiated at an angle greater than or equal to the angle, an effect of refinement of the magnetic domain may not appear.

Because a scanning speed of the overlapping lasers should be faster than a progress speed of the steel sheet, the scanning speed may be 0.1 to 300 m/sec, and the speed may mean a value exemplified under a condition of 15 mpm.

An embodiment of the present disclosure may provide a grain-oriented electrical steel sheet including an electrical steel sheet substrate and an insulating film layer disposed on the electrical steel sheet substrate, and at least one deformation portion having a linear shape may be formed on a surface of the electrical steel sheet substrate and a natural corrosion potential value of the steel sheet may be -350 mV or more.

**In** the grain-oriented electrical steel sheet, a glass film layer may be further formed between the electrical steel sheet substrate and the insulating film layer.

**The** glass e layer may include forsterite as a primary component, and the insulating film layer may include phosphate and colloidal silica as primary components. **In** the present disclosure, the primary component may mean that the forsterite includes 0.7 g/m² or more as a one surface coating amount of oxygen of a surface of the steel sheet, the phosphate of the insulating film includes 0.1 g/m² or more based on a one surface coating amount of the surface of the steel sheet, and the colloidal silica of the insulating film includes 0.1 g/m² or more based on a one surface coating amount of the surface of the steel sheet.

The natural corrosion potential value may measure an electric potential of an open circuit, and may be measured by an open circuit potential measurement method that is commonly used by an ordinary technician.

The natural corrosion potential value may be measured by an open circuit potential (OCP) method. If the natural corrosion potential value is 0, corrosion may not occur, and the larger the negative value of the natural corrosion potential value, the more corrosion occurs. A measurement condition of the natural corrosion potential value may be expressed as a result measured after the steel sheet is maintained in a 3.5% NaCl solution in which a constant temperature is maintained at 30°C for 600 seconds (10 minutes).

The natural corrosion potential value of -350 mV or more in the steel sheet in which the deformation portion 10 having a linear shape of the present disclosure is formed may mean that corrosion does not occur well at a value between 0 and -350 mV. In this case, that the deformation portion with the linear shape is formed at the electrical steel sheet may mean that at least one linear deformation portion with the linear shape is formed on an exposed surface of a specimen to be measured that is exposed to an electrolyte.

In an embodiment of the present disclosure, the natural corrosion potential value of the electrical steel sheet may be -50 to -300 mV. If the natural corrosion potential value of the electrical steel sheet is -50 mV or higher, the deformation portion with the linear shape may be incompletely formed so that a required iron loss characteristic is not secured. **If** the natural corrosion potential value of the electrical steel sheet is -300 mV or less, a corrosion characteristic may be slightly lowered even if the deformation portion with the linear shape is formed.

**In** an embodiment of the present disclosure, the deformation portion 10 with the linear shape may mean a deformation portion formed by a beam spot 20 in which a portion having a large beam width by the second laser B with the long wavelength and a portion having a small beam width by the first laser beam A with the short wavelength are commonly overlapped when the overlapping laser beams 20 in which the laser beams having different wavelengths are overlapped are irradiated to the surface of the steel sheet, and a width of the deformation portion may have a value equal to or close to a beam width or a beam diameter of the first laser beam A with the short wavelength.

Overlapping laser beams 30 may be irradiated so that the insulating film layer is partially melted and then is re-solidified on an upper portion of the deformation portion 10 with the linear shape formed at the steel sheet (that is, a surface of the insulating film layer directly in contact with the overlapping laser beams.

**The** re-solidification layer formed on the surface of the insulating film layer may be mainly formed directly below a portion irradiated with the overlapping laser beams 20, and the re-solidification layer may appear intermittently or continuously in a linear shape along a trajectory in which the overlapping laser beams 20 are scanned.

**If** overlapping lasers 20 are irradiated on the surface of the steel sheet where the insulating film is formed, some phosphate forming the insulating film layer may be melted by the overlapping lasers and the melted insulating film layer may be solidified immediately after the overlapping laser beams passes.

Formation of the partial re-solidification layer may be a phenomenon that does not appear when each of the second laser (e.g., the CO₂ laser) and the first laser (e.g., the optical fiber laser) constituting the overlapping laser beams is irradiated alone. However, when the first laser (e.g., the optical fiber laser) is irradiated alone at a high output sufficient to secure an effective iron loss, some re-solidification layers may appear, but a surface of the insulating film layer may be peeled off and damaged (for example, a blister may be formed on the surface) so that the natural corrosion potential value appears very low.

**That** is, even if the first laser (e.g., the optical fiber laser) alone irradiates the surface of the steel sheet to form the deformation portion having a valid iron loss value, the natural corrosion potential value in the deformation portion may be -700 mV or less so that corrosion occurs well.

When the first laser (e.g., the optical fiber laser) constituting the overlapping lasers is compared with a single optical fiber laser, a partial re-solidification layer may be formed with only about 70% of an output of the first laser (e.g., the optical fiber laser) constituting the overlapping lasers.

A reason why the partial re-solidification layer appears in the insulating film layer when the overlapping laser beams are irradiated may be that phosphorus is first vaporized and silicon oxides including Si and O are re-solidified into an amorphous state because a vaporization point of phosphate constituting the insulating film layer is low. When the re-solidification layer in the amorphous state is formed on a surface of the insulating film layer, a corrosion characteristic may be improved due to an amorphous intrinsic characteristic.

A thickness of the re-solidification layer of the insulating film layer formed by irradiating the surface of the steel sheet with the overlapping laser beams 20 may be within 20% of an average cross-sectional thickness of the insulating film layer.

**If** the thickness of the re-solidification layer of the insulating film becomes larger than 20% of the average cross-sectional thickness, an absolute thickness of the insulating film layer may become thin so that corrosion resistance is disadvantageous, and the iron loss may be inferior by reducing a tension effect of the insulating film layer so that the range is limited.

If the partial re-solidification layer is formed in the insulating film layer, a physical property of the insulating film layer may be changed so that the entire insulating film layer is stabilized to be partially peeled off and not damaged. That a partial melting layer is formed within 20% of a thickness of the insulating film layer may prove that a sufficient laser energy is applied to the steel sheet compared with an incident energy of the laser without greater damage to the insulating film layer.

If the partial re-solidification layer is formed on 20% or more of a front surface of the insulating film layer, damage to the insulating film layer may be further expanded so that the tension effect of the insulating film layer is lost. However, if the partial re-solidification layer is formed in the insulating film layer, it may be seen that an energy absorption rate by the laser is sufficiently applied to the steel sheet.

**If** the deformation portion is formed at the electrical steel sheet and the partial re-solidification layer is formed at an upper insulating film layer of the steel sheet by irradiation of the overlapping lasers, shrinkage may occur in the insulating film layer due to formation of the re-solidification layer so that a thickness of the insulating film layer in which the deformation portion of the steel sheet is formed is changed.

**In** this case, a thickness of the insulating film layer formed of an upper portion of the deformation portion formed at the steel sheet may be 60% or more of a thickness of the insulating film layer of an upper portion of a region where the deformation portion is not formed.

**If** the thickness of the film layer of the deformation portion formed at the steel sheet is less than 60% of the thickness of the insulating film layer of the upper portion of the region where the deformation portion is not formed, an iron loss may be degraded due to corrosion resistance degradation and a tension reduction effect caused by a decrease in the film thickness.

**In** an embodiment of the present disclosure, in order to secure insulation between steel sheets after refinement of the magnetic domain by thermal deformation using the overlapping laser beams, the insulating film may be prevented from peeling, and a glass film may be prevented from peeling.

When the deformation portion is formed by irradiating the overlapping lasers on a surface of the electrical steel sheet according to an embodiment of the present disclosure, a W15/50 iron loss improvement rate of the steel sheet may be 6% or more. **If** the W15/50 iron loss improvement rate is lower than 6%, it may be difficult to expect a desired iron loss reduction effect because a laser absorption rate of the steel sheet is low.

When the deformation portion is formed by irradiating the overlapping lasers on the surface of the electrical steel sheet according to an embodiment of the present disclosure, a W17/50 iron loss improvement rate of the steel sheet may be 9% or more. **If** the W17/50 iron loss improvement rate is lower than 9%, it may be difficult to expect a desired iron loss reduction effect because a laser absorption rate of the steel sheet is low.

Hereinafter, a method for manufacturing the grain-oriented electrical steel sheet and a method for refining the magnetic domain of the grain-oriented electrical steel sheet according to an embodiment of the present disclosure will be described in detail.

### [Manufacturing of cold-rolled steel sheet]

**To** manufacture the grain-oriented electrical steel sheet, first, a slab of the electrical steel sheet substrate may be manufactured.

**If** a magnetization easy axis is aligned in a predetermined direction so that a slab functions as the electrical steel sheet, a chemical composition and a metal structure of the slab are not separately limited. For example, the chemical composition of the slab is as follows.

**The** slab may include, in wt%, C: 0.08% or less (excluding 0%), Si: 1.0 to 6.5%, Mn: 0.005 to 3.0%, at least one of Nb, V, and Ti: 0.070% or less, at least one of Cr, Sn, and Sb: 2.5% or less, Al: 2.0% or less (excluding 0%), at least one of P and S: 0.100% or less (excluding 0%), Cu and Sn: 1.0% or less, a total of a rare earth element and another impurity: 0.2% or less, and may include the balance (or the remainder) of Fe.

### (C: 0.08% or less (excluding 0%))

Carbon (C) may be an element that is inevitably mixed into steel, but carbon (C) may be controlled to an appropriate content because it deteriorates a magnetic characteristic due to magnetic aging. If a content of C within the steel sheet is too low, phase transformation may not occur sufficiently during a manufacturing process thereof. Thus, a microstructure of the steel sheet may be made non-uniform so that a secondary recrystallization structure becomes unstable. If the content of C within the steel sheet is too high, carbide may become coarse and an amount of precipitation thereof may be excessive during the manufacturing process. Thus, a degree of integration of a Goss texture may be reduced due to insufficient decarbonization so that a secondary recrystallization texture is damaged. Therefore, the content of C of the steel sheet may be 0.08% or less or 0.001 to 0.040%.

### (Si: 1.0 to 6.5%)

Silicon (Si) may be a basic composition of the grain-oriented electrical steel, and may play a role in increasing resistivity of the steel sheet to reduce an iron loss. If a content of Si is less than 1.0%, the resistivity may be decreased so that an eddy current loss is increased. Thus, an iron loss characteristic may be deteriorated so that an effect of Si addition is not expected. If the content of Si is 6.5% or more, brittleness of the steel sheet may be increased and toughness of the steel sheet may be decreased so that breakage of the sheet occurs during a rolling process, and nitride may not be sufficiently formed during the manufacturing process so that sufficient grain inhibition necessary for secondary recrystallization is not secured in a final high-temperature annealing process. Therefore, the content of Si may be 1.0 to 6.5%.

### (Mn: 0.005 to 3.0%)

Manganese (Mn) may have an effect of reducing a total iron loss by increasing resistivity to reduce an eddy current loss, and manganese (Mn) may be an important element that reacts with S in a fired steel state to form Mn-based sulfide and reacts with nitrogen introduced by nitriding with Si to form a precipitate of (Al, Si, Mn) N so that it inhibits growth of a primary recrystallized grain to cause secondary recrystallization and affects surface quality of a final product. If too little Mn is included, the surface quality of the final product may be deteriorated. If too much Mn is included, an austenite phase fraction may be very increased so that the Goss texture is damaged, a magnetic flux density may be reduced, and an oxide layer may be formed too excessively during decarbonization annealing so that decarbonization is hindered. Therefore, a content of Mn may be 0.005 to 3.0%.

### (at least one of Nb, V, and Ti: 0.05% or less)

Niobium (Nb), vanadium (V), and titanium (Ti) may be elements that react with C and N during the manufacturing process to form a precipitate. If too much at least one of Nb, V, and Ti is added, the at least one of Nb, V, and Ti may remain in the steel sheet even after secondary recrystallization annealing so that a magnetic characteristic of the steel sheet is reduced. Therefore, at least one element selected from Nb, V, and Ti may be controlled so that a content of the at least one element is 0.05% or less.

### (at least one of Cr, Sn, and Sb: 2.5% or less)

Chromium (Cr) may be added for a purpose of reducing an iron loss by promoting formation of the Goss texture, and Sn may be added for a purpose of suppressing grain growth to ultimately improve a magnetic flux density. Antimony (Sb) may have an effect of inhibiting growth of a grain to stabilize secondary recrystallization by segregating at a grain boundary. Because all of the three elements that are Cr, Sn, and Sb are correlated with formation of a secondary recrystallized structure, a total of Sn, Sb, and Cr may be controlled so that a content of the total of Sn, Sb, and Cr is 2.5% or less.

### (Al: 2.0% or less (excluding 0%))

In addition to Al-based nitride precipitated during the manufacturing process, aluminum (Al) may be coupled with N introduced by nitriding treatment during a primary recrystallization process and Al, Si, and Mn present in a solid solution state in steel to form (Al, Si, Mn)N and AIN-type nitride, so that aluminum (Al) serves as a strong grain growth inhibitor. If too much Al is included, a precipitate may become non-uniform so that formation of secondary recrystallization becomes unstable. Thus, a magnetic characteristic of the steel sheet may be reduced so that Al is added in an amount of 2.0% or less.

### (at least one of P and S: 0.1% or less (excluding 0%))

Phosphorus (P) may be segregated at a grain boundary to hinder a movement of the grain boundary and simultaneously serve as an auxiliary role inhibiting growth of a grain, and if too much S is added, S may make formation of secondary recrystallization unstable. P and S may be elements that are inevitably added during a process of manufacturing the electrical steel sheet, and may be controlled so that a content of P and S is 0.1% or less.

### (Cu and Sn: 0.1% or less)

Copper (Cu) may play a role of improving the texture by being partially dissolved within a grain, and if a content of Cu and Sn is excessive, Cu and Sn may be controlled so that the content of Cu and Sn is 0.1% or less because Cu and Sn are segregated in a grain boundary to form a liquid phase at a high temperature.

### (total of rare earth element and other impurity: 0.2% or less)

**The** grain-oriented electrical steel sheet according to an embodiment of the present disclosure may include the rare earth element such as cerium (Ce) or praseodymium (Pr) and the other impurity, and a total amount of the rare earth element and the impurity may be 0.2% or less. **The** rare earth element and the impurity may refer to an impurity that is intentionally introduced or inevitably mixed in steelmaking and a manufacturing process of the grain-oriented electrical steel sheet. Because the inevitable impurity is widely known, a detailed description thereof is omitted. An embodiment of the present disclosure does not exclude addition of an element in addition to the above-described alloy component, and may be variously included within a range that does not impair the technical idea of the present disclosure. **If** the additional element is included, the additional element may replace the balance of iron (Fe).

Next, the slab may be manufactured by a continuous casting method, and the manufactured slab may be heated by a usual method to be hot-rolled. hot-rolled sheet annealing may be performed on the hot-rolled slab selectively as necessary to be cold-rolled so that the cold-rolled steel sheet is manufactured in a thickness range of 0.1 to 0.5 mm. **The** cold rolling may be performed by one cold rolling or two or more cold rollings with intermediate annealing interposed therebetween.

### [primary recrystallization annealing]

**The** primary recrystallization annealing may be performed on the cold-rolled steel sheet described above through a simultaneous decarbonitriding or post-decarbonization nitrification process. **In** the primary recrystallization annealing by simultaneous decarbonitriding, a structure of the cold rolling deformed during the annealing process may include recrystallization so that decarbonization annealing is performed on the structure of the cold rolling. **To** this end, the decarbonization annealing may be performed in a mixed gas atmosphere in which nitrogen, hydrogen, and water are mixed. **In** the nitriding after decarbonization, a nitrification treatment in which a nitrogen ion is introduced into the steel sheet may be performed using an ammonia gas after decarbonization.

**If** the simultaneous decarbonitriding is performed, in the primary recrystallization annealing for the cold-rolled steel sheet loaded into a furnace, a dew point temperature of an atmospheric gas may be set to 40 to 70°C in a 700 to 900°C section and a Fe₂SiO₄/SiO₂ ratio of a surface thereof may be controlled to 0.5 to 3.0 to form an oxide layer on a surface of the electrical steel sheet.

### [secondary recrystallization annealing]

Then, an annealing separation agent based on MgO may be applied to a surface of the electrical steel sheet. The steel sheet applied with the annealing separation agent may be heated to 1,000°C or higher to cause secondary recrystallization by long-term crack annealing so that it forms a texture of a Goss orientation in which a {110} surface of the steel sheet is parallel to a rolling surface and a <001> direction is parallel to a rolling direction. Through the final high-temperature annealing process, a glass film layer including forsterite may be formed on a surface of the steel sheet and the secondary recrystallization may be formed inside the steel sheet.

### [formation of insulating film]

A steel sheet on which the secondary recrystallization occurs may be coated with a single or composite insulating coating liquid of colloidal silica and metal phosphate and then may be annealed to form an insulating film layer on a surface of the electrical steel sheet on which the glass film layer is formed.

A method for forming the insulating film layer may be used without particular limitation, and for example, the insulating film layer may be formed by applying an insulating coating liquid including phosphate. A coating liquid including colloidal silica and metal phosphate may be used as the insulating coating liquid. In this case, the metal phosphate may be Al phosphate, Mg phosphate, or a combination thereof, and a content of Al, Mg, or a combination thereof compared with a weight of the insulating coating liquid may be 15 wt% or more.

### [refinement treatment of magnetic domain]

Laser beams 20 in which the first laser A and the second laser B are overlapped may be simultaneously irradiated to a surface of the electrical steel sheet in which the glass film and the insulating film are sequentially formed by the process described above to form the deformation portion 10 with the linear shape on the surface of the steel sheet.

In this case, irradiation angles of the overlapping laser beams, a quality of the laser beam, and a type of a mode of the laser are the same as those described above, so that a detailed description thereof is omitted.

### [measurement of natural corrosion potential value]

The overlapping laser beams 20 may be irradiated on a surface of a manufactured electrical steel sheet to form the deformation portion 10 and then a portion of the steel sheet may be cut into a circular shape to measure the natural corrosion potential value.

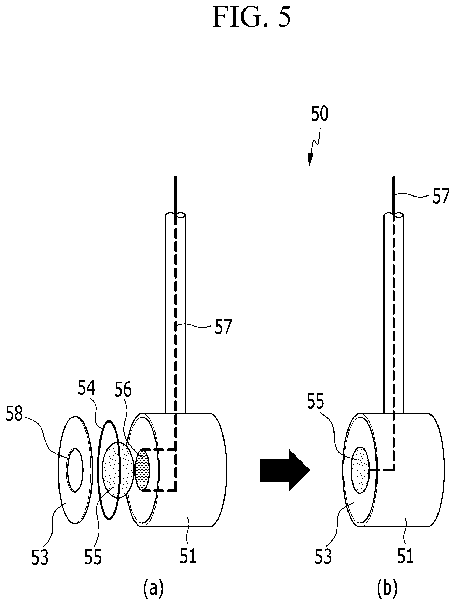

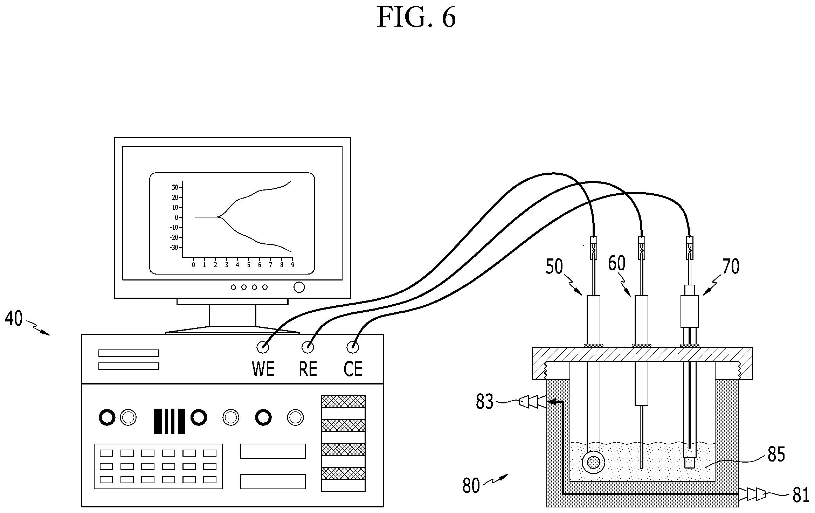

FIG. 5 and FIG. 6 show a device for measuring the natural corrosion potential value.

To measure the natural corrosion potential value, first, the manufactured electrical steel sheet may be cut to a thickness of 0.2 mm or 0.23 mm and a diameter of 15 mm. In this case, at least one deformation portion with the linear shape may be formed at a specimen with a circular shape that is cut, and the deformation portion with the linear shape may be cut to be disposed in a center of the specimen. **The** cut specimen may be polished and washed by a conventional method so that the polished and washed specimen is prepared to measure the natural corrosion potential value.

As shown in FIG. 5, a prepared specimen 55 for measuring the potential value may be attached to an electrode plate 56 exposed to the inside of a specimen holder 51 formed at an end of a working electrode (WE) 50 of a potential value measuring device. **The** specimen 55 may be fixed to the specimen holder 51 using a specimen holder lid 53 with a sealing ring 54 interposed therebetween. **In** this case, an opening 58 may be formed on a front surface of the specimen holder lid 53 so that the specimen 55 to be measured is in direct contact with an electrolyte. A size of the opening 58 may be 10 mm in diameter. Therefore, when an actual potential value is measured, a surface of the specimen 55 with a diameter of about 10 mm may be in direct contact with an electrolyte 85.

FIG. 6 shows a natural corrosion potential value measuring device used in an embodiment of the present disclosure.

**The** measuring device may include a measuring device body 40, a reactor (or a reaction tank) 80, and the working electrode (WE) 50, a reference electrode (RE) 60, and a counter electrode (CE) 70 installed at the reaction tank. **The** reactor 80 may have a constant temperature water inlet 81 and a constant temperature water outlet 83 formed so that the electrolyte 85 contained in the reactor 80 maintain a constant temperature, and the inside of the reactor 80 may be sealed.

A high-density carbon electrode may be used as a material of the working electrode (WE) 50, a calomel electrode may be used as a material of the reference electrode (RE) 60, and a platinum electrode may be used as a material of the counter electrode (CE) 70.

A natural corrosion potential value measuring device body 40 may use a Reference 600 model of Gamry Instruments, and the measurement condition may be a voltage range of ±0.5 V and a scan rate of 0.333 mV/s.

The electrolyte 85 used to measure the natural corrosion potential value may use a 3.5% NaCl solution, the electrolyte 85 may be maintained at a constant temperature of 30°C, and an initial state between the specimen 55 and the electrolyte 85 may be maintained for 600 seconds (10 minutes) after the specimen is installed and then the natural corrosion potential value may be measured.

The natural corrosion potential value including other conditions and characteristics related to the measurement may be measured by referring to an open circuit natural corrosion potential measurement method known to those skilled in the art such as KS D 0279 or KS D 0238.

Hereinafter, the present disclosure will be described in more detail through a specific embodiment. However, the embodiment is only intended to illustrate the present disclosure, and the present disclosure is not limited thereto.

### Experimental Example

Cold-rolled steel sheets with thicknesses of 0.20 mm and 0.23 mm are manufactured using a slab having a composition shown in Table 1 below and hot-rolled and cold-rolled. In Table 1, an element % may mean weight %.

**(Table 1)**

| C (%) | Si (%) | Mn (%) | Cr (%) | Sn (%) | Sb (%) | Al (%) | Balance |
|---|---|---|---|---|---|---|---|
| 0.05 | 3.518 | 0.103 | 0.113 | 0.0699 | 0.019 | 0.003 | Fe |

The cold-rolled steel sheet is maintained at a temperature of 840°C in a humid atmosphere of a mixed gas of hydrogen, nitrogen, and ammonia for 150 seconds, a dew point temperature of the humid atmosphere may be 69°C and a Fe₂SiO₄/SiO₂ ratio of a surface thereof may be controlled to 1.2, and decarbonization annealing including primary recrystallization annealing and nitriding treatment are performed on the cold-rolled steel sheet.

An annealing separation agent including MgO is applied to a surface of the steel sheet in which primary recrystallization treatment is performed to be finally annealed at a high temperature. In this case, the final high-temperature annealing is performed in a mixed atmosphere of 25 volume% nitrogen and 75 volume% hydrogen up to 1,150°C, and after a temperature reaches 1,150°C, the steel sheet is maintained in a 100 volume% hydrogen atmosphere for approximately 8 hours and then is cooled in the furnace. In this case, the final high-temperature annealing is performed in a mixed atmosphere of 25 volume% nitrogen and 75 volume% hydrogen up to 1,150°C, and after a temperature reaches 1,150°C, the steel sheet is maintained in a 100 volume% hydrogen atmosphere for approximately 8 hours and then is cooled in the furnace.

A coating solution mixed with a colloidal silica nanoparticle and metal phosphate is applied to a surface of the steel sheet in which the secondary recrystallization annealing is completed by the final high-temperature annealing process and is heat-treated at a temperature of 870°C for 55 seconds to form an insulating coating layer for the grain-oriented electrical steel sheet.

Next, the overlapping laser beams 20 in which the first laser (e.g., the optical fiber laser) and the second laser (e.g., the CO₂ laser) overlap may be simultaneously irradiated to form the deformation portion 10 with the linear shape on the surface of the steel sheet.

In this case, an irradiation interval of the overlapping laser beams 20 irradiated on the surface of the steel sheet is changed to 4.0 to 7.0 mm, and the deformation portion 10 with the linear shape is formed on the surface of the steel sheet in a direction intersecting the rolling direction.

The optical fiber laser with an output of 52 to 150 W that is the laser used for refinement of the magnetic domain is used as the first laser A, and the CO₂ laser with an output of 260 to 500 W that is the laser used for refinement of the magnetic domain is used as the second laser B. In this case, a scanning speed of the overlapping laser beams 20 is scanned while a speed is changed within a range of 0.1 to 300 m/s, and an irradiation angle thereof is set to 1° or less.

Table 2 below shows a test condition and a measured magnetic value for a 0.2 mm-thick steel sheet, and Table 3 below shows a test condition and a measured magnetic value for a 0.23 mm-thick steel sheet.

In Table 2 and Table 3, each of W15/50 and W17/50 may refer to an iron loss improvement rate for a specimen that undergoes processing of the magnetic domain compared with an original plate.

**(Table 2)**

| Classifi cation | Test condition | | | | Ener gy dens ity (J/m m²) | Magnetism of parent steel sheet | | | Magnetism after refinement of magnetic domain | | | Iron loss improve ment rate (W17/5 0, W15/50 ) |
|---|---|---|---|---|---|---|---|---|---|---|---|---|
| | Method of irradiati on | Out put of opti cal fibe r lase r (W) | Out put of CO₂ lase r (W) | Irradi ation interv al (mm) | | W15 /50 | W17 /50 | Relativ e permea bility | W15 /50 | W17 /50 | Relativ e perme ability | |
| Experim ent 1 | Overla pping | 30 | 400 | 5 | 0.28 | 0.53 9 | 0.76 8 | 19820 | 0.49 2 | 0.69 5 | 19250 | 9.5/8.7 |
| Experim ent 2 | | 52 | 260 | 5 | 0.32 | 0.53 9 | 0.77 6 | 19845 | 0.47 6 | 0.66 6 | 14582 | 14.1/11. 7 |
| Experim ent 3 | | 92 | 260 | 5 | 0.48 | 0.54 8 | 0.80 9 | 15887 | 0.48 7 | 0.69 6 | 13076 | 14.0/11. 1 |
| Experim ent 4 | | 100 | 220 | 5 | 0.51 | 0.53 9 | 0.77 5 | 18890 | 0.48 6 | 0.67 6 | 15153 | 12.8/9.8 |
| Experim ent 5 | | 150 | 200 | 5 | 0.71 | 0.53 5 | 0.77 4 | 19120 | 0.48 1 | 0.67 9 | 14525 | 12.3/10. 1 |
| Compar ative Exampl e 1 | Seque ntial overlap ping | 52 | 260 | 5 | 0.32 | 0.55 3 | 0.82 0 | 14238 | 0.52 9 | 0.77 3 | 13917 | 5.7/4.2 |
| Compar ative Exampl e 2 | Single CO₂ laser | - | 260 | 5 | 0.10 | 0.53 6 | 0.77 5 | 18650 | 0.52 6 | 0.75 8 | 18268 | 2.1/1.9 |
| Compar ative Exampl e 3 | | | 360 | 5 | 0.14 | 0.52 9 | 0.76 7 | 18660 | 0.51 5 | 0.71 3 | 16238 | 7.0/2.6 |
| Compar ative Exampl e 4 | | - | 400 | 5 | 0.15 | 0.52 6 | 0.76 8 | 18670 | 0.48 9 | 0.70 1 | 14238 | 8.7/7.0 |
| Compar ative Exampl e 5 | | | 460 | 5 | 0.17 | 0.52 8 | 0.76 6 | 18675 | 0.49 5 | 0.70 3 | 14110 | 8.2/6.3 |
| Compar ative Exampl e 6 | | | 560 | 5 | 0.21 | 0.52 9 | 0.76 8 | 18665 | 0.50 5 | 0.71 5 | 14025 | 6.9/4.5 |
| Compar ative Exampl e 7 | | | 660 | 5 | 0.25 | 0.52 7 | 0.76 7 | 18660 | 0.51 5 | 0.73 0 | 13875 | 4.8/2.3 |
| Compar ative Exampl e 8 | Single optical fiber laser | 52 | - | 5 | 0.22 | 0.50 2 | 0.73 4 | 18703 | 0.49 2 | 0.70 6 | 18565 | 3.8/2.0 |
| Compar ative Exampl e 9 | | 62 | | 5 | 0.26 | 0.52 1 | 0.76 1 | 18780 | 0.49 7 | 0.70 3 | 18580 | 7.6/4.6 |
| Compar ative Exampl e 10 | | 72 | | 5 | 0.30 | 0.51 9 | 0.74 6 | 18410 | 0.49 0 | 0.68 7 | 17433 | 7.9/5.6 |
| Compar ative Exampl e 11 | | 82 | | 5 | 0.34 | 0.52 1 | 0.75 1 | 19949 | 0.48 5 | 0.68 5 | 17284 | 8.8/6.9 |
| Compar ative Exampl e 12 | | 96 | - | 5 | 0.40 | 0.52 1 | 0.76 3 | 20516 | 0.48 9 | 0.69 6 | 16625 | 8.8/6.1 |
| Compar ative Exampl e 13 | | 150 | | 5 | 0.63 | 0.52 2 | 0.75 1 | 20066 | 0.49 5 | 0.69 3 | 13999 | 7.7/5.2 |

That the irradiation method of the laser of Comparative Example 1 is sequential overlapping in Table 2 may mean that the CO₂ laser that is the second laser B is first irradiated, then the steel sheet is cooled to a room temperature after a certain period of time, and then the optical fiber laser that is the first laser A is sequentially irradiated.

**(Table 3)**

| Classification | Test condition | | | | Ener gy dens ity (J/m m²) | Magnetism of parent steel sheet | | | Magnetism after refinement of magnetic domain | | | Iron loss improve ment rate (W17/5 0, W15/50) |
|---|---|---|---|---|---|---|---|---|---|---|---|---|
| | Method of irradiati on | Out put of opti cal fibe r lase r (W) | Out put of CO₂ laser (W) | Irradi ation interv al (mm) | | W15 /50 | W17 /50 | Relativ e permea bility | W15 /50 | W17 /50 | Relativ e perme ability | |
| Experim ent 6 | Overla pping | 30 | 400 | 5 | 0.28 | 0.57 2 | 0.80 1 | 19567 | 0.53 5 | 0.72 6 | 18452 | 9.4/6.5 |
| Experim ent 7 | | 52 | 260 | 4 | 0.25 | 0.57 1 | 0.80 4 | 19364 | 0.53 1 | 0.73 2 | 16910 | 9.0/7.0 |
| Experim ent 8 | | | | 5 | 0.32 | 0.57 2 | 0.79 9 | 19276 | 0.51 1 | 0.70 9 | 17366 | 11.3/10. 7 |
| Experim ent 9 | | | | 6 | 0.38 | 0.57 1 | 0.80 1 | 19286 | 0.51 7 | 0.70 5 | 16287 | 12.0/9.5 |
| Experim ent 10 | | | | 7 | 0.44 | 0.57 0 | 0.81 0 | 19350 | 0.52 7 | 0.73 6 | 16154 | 9.1/7.5 |
| Experim ent 11 | | 92 | 260 | 5 | 0.48 | 0.57 1 | 0.80 5 | 19370 | 0.50 8 | 0.69 8 | 16054 | 13.3/11. 0 |
| Experim ent 12 | | 100 | 230 | 5 | 0.51 | 0.57 2 | 0.80 4 | 19365 | 0.50 5 | 0.69 6 | 15956 | 13.4/11. 7 |
| Experim ent 13 | | 150 | 200 | 5 | 0.71 | 0.57 2 | 0.80 6 | 19368 | 0.50 3 | 0.69 3 | 15756 | 14.0/12. 1 |
| Compar ative | Single CO₂ | - | 260 | 5 | 0.10 | 0.58 7 | 0.81 3 | 19450 | 0.57 3 | 0.78 7 | 17250 | 3.2/2.4 |
| Exampl e 14 | laser | | | | | | | | | | | |
| Compar ative Exampl e 15 | | | 360 | 5 | 0.14 | 0.57 8 | 0.81 5 | 19554 | 0.53 9 | 0.74 3 | 17100 | 8.8/6.7 |
| Compar ative Exampl e 16 | | | 400 | 4 | 0.08 | 0.57 5 | 0.80 2 | 19567 | 0.55 8 | 0.77 | 18762 | 4.0/3.0 |
| Compar ative Exampl e 17 | | | | 5 | 0.10 | 0.57 2 | 0.80 5 | 19685 | 0.53 8 | 0.74 | 19012 | 8.1/5.9 |
| Compar ative Exampl e 18 | | | | 6 | 0.12 | 0.57 2 | 0.80 8 | 19376 | 0.53 8 | 0.74 1 | 17265 | 8.3/5.9 |
| Compar ative Exampl e 19 | | | | 7 | 0.14 | 0.57 5 | 0.80 5 | 18635 | 0.54 2 | 0.74 2 | 15458 | 7.8/5.7 |
| Compar | | | 460 | 5 | 0.17 | 0.57 | 0.80 | 19354 | 0.53 | 0.73 | 14254 | 8.6/6.1 |
| ative Exampl e 20 | | | | | | 1 | 5 | | 6 | 6 | | |
| Compar ative Exampl e 21 | | | 560 | 5 | 0.21 | 0.57 2 | 0.80 6 | 19452 | 0.54 | 0.74 5 | 12354 | 7.6/5.6 |
| Compar ative Exampl e 22 | | | 660 | 5 | 0.25 | 0.57 1 | 0.80 5 | 19387 | 0.53 8 | 0.74 2 | 11456 | 7.8/5.8 |
| Compar ative Exampl e 23 | Single optical fiber laser | 52 | - | 5 | 0.22 | 0.56 8 | 0.79 8 | 21547 | 0.55 7 | 0.77 2 | 21410 | 3.3/1.9 |
| Compar ative Exampl e 24 | | 62 | | 5 | 0.26 | 0.57 1 | 0.80 2 | 19575 | 0.55 3 | 0.76 7 | 19025 | 4.4/3.2 |
| Compar ative Exampl e 25 | | 72 | | 5 | 0.30 | 0.57 2 | 0.80 6 | 19565 | 0.55 2 | 0.76 5 | 18957 | 5.1/3.5 |
| Compar ative Exampl e 26 | | 82 | | 5 | 0.34 | 0.57 5 | 0.80 5 | 19454 | 0.54 8 | 0.75 6 | 17898 | 6.1/4.7 |
| Compar ative Exampl e 27 | | 96 | | 4 | 0.32 | 0.57 5 | 0.80 5 | 19321 | 0.54 8 | 0.74 3 | 16693 | 7.7/4.7 |
| Compar ative Exampl e 28 | | | | 5 | 0.40 | 0.57 2 | 0.80 2 | 19558 | 0.54 2 | 0.73 8 | 16452 | 8.0/5.2 |
| Compar ative Exampl e 29 | | | | 6 | 0.48 | 0.57 6 | 0.80 6 | 19548 | 0.53 4 | 0.73 6 | 16152 | 8.7/7.3 |
| Compar ative Exampl e 30 | | | | 7 | 0.56 | 0.57 3 | 0.80 4 | 19654 | 0.54 2 | 0.74 5 | 15897 | 7.3/5.4 |
| Compar ative Exampl e 31 | | 150 | | 5 | 0.63 | 0.57 2 | 0.80 1 | 19875 | 0.55 4 | 0.75 2 | 15325 | 6.1/3.1 |

**The natural** corrosion potential value for a manufactured grain-oriented electrical steel sheet is measured, and a salt spray test for the manufactured grain-oriented electrical steel sheet is also performed.

The natural potential corrosion value is measured using the natural corrosion potential value measuring device shown in FIG. 5 and FIG. 6 after the manufactured grain-oriented electrical steel sheet is cut to have a diameter of 15 mm with respect to each of thicknesses of 0.2 mm and 0.23 mm thereof.

The measured natural corrosion potential value for a specimen with a thickness of 0.2 mm of the grain-oriented electrical steel sheet is shown in Table 4 below, and the measured natural corrosion potential value for a specimen with a thickness of 0.23 mm is shown in Table 5 below.

Corrosion characteristics shown in Tables 4 and 5 below are distinguished based on the natural corrosion potential value and the salt spray test. In Tables 4 and 5, a "⊚" mark may indicate that the natural corrosion potential value is -200 mV or higher and corrosion does not occur even after 8 hours of salt spray. A "∘" mark may indicate that the natural corrosion potential value is -200 to -350 mV and corrosion does not occur even after 8 hours of salt spray. A "X" mark may indicate that the natural corrosion potential value is -350 to -850 mV and corrosion does not occur even after 8 hours of salt spray.

The salt spray test is conducted according to a measurement standard of KS D 9502.

**(Table 4)**

| Classification | Test condition | | | | Energy density (J/mm²) | Corrosion potential value (mV) | Naked-eye observation of corrosion |
|---|---|---|---|---|---|---|---|
| | Method of irradiation | Output of optical fiber laser (W) | Output of CO₂ laser (W) | Irradiation interval (mm) | | | |
| Experiment 14 | | 30 | 400 | 5.0 | 0.28 | -120 | ⊚ |
| Experiment 15 | | 52 | 260 | 5.0 | 0.32 | -140 | ⊚ |
| Experiment 16 | | 92 | 260 | 5.0 | 0.48 | -160 | ⊚ |
| Experiment 17 | | 100 | 230 | 5.0 | 0.51 | -200 | ⊚ |
| Experiment 18 | | 150 | 200 | 5.0 | 0.71 | -345 | ○ |
| Comparative Example 32 | Sequential overlapping | 52 | 260 | 5.0 | 0.32 | -720 | X |
| Comparative Example 33 | Single CO₂ laser | - | 260 | 5.0 | 0.10 | -210 | ○ |
| Comparative Example 34 | | | 360 | 5.0 | 0.14 | -660 | X |
| Comparative Example 35 | | | 400 | 5.0 | 0.15 | -680 | X |
| Comparative Example 36 | | | 460 | 5.0 | 0.17 | -685 | X |
| Comparative Example 37 | | | 560 | 5.0 | 0.21 | -670 | X |
| Comparative Example 38 | | | 660 | 5.0 | 0.25 | -690 | X |
| Comparative Example 39 | Single optical fiber laser | 52 | - | 5.0 | 0.22 | -120 | ⊚ |
| Comparative Example 40 | | 62 | | 5.0 | 0.26 | -740 | X |
| Comparative Example 41 | | 72 | | 5.0 | 0.30 | -735 | X |
| Comparative Example 42 | | 82 | | 5.0 | 0.34 | -750 | X |
| Comparative Example 43 | | 96 | | 5.0 | 0.40 | -800 | X |
| Comparative Example 44 | | 150 | | 5.0 | 0.63 | -820 | X |

**(Table 5)**

| Classification | Test condition | | | | Energy density (J/mm²) | Corrosion potential value (mV) | Naked-eye observation of corrosion |
|---|---|---|---|---|---|---|---|
| | Method of irradiation | Output of optical fiber laser (W) | Output of CO₂ laser (W) | Irradiation interval (mm) | | | |
| experiment 19 | Overlapping | 30 | 400 | 5.0 | 0.28 | -110 | ⊚ |
| experiment 20 | | 52 | 260 | 4 | 0.25 | -145 | ⊚ |
| experiment 21 | | 52 | 260 | 5 | 0.32 | -158 | ⊚ |
| experiment 22 | | 52 | 260 | 6 | 0.38 | -142 | ⊚ |
| experiment 23 | | 52 | 260 | 7 | 0.44 | -160 | ⊚ |
| experiment 24 | | 92 | 260 | 5.0 | 0.48 | -165 | ⊚ |
| experiment 25 | | 100 | 230 | 5.0 | 0.51 | -220 | ○ |
| experiment 26 | | 150 | 200 | 5.0 | 0.71 | -340 | ○ |
| Comparative Example 45 | Single CO₂ laser | - | 260 | 5 | 0.10 | -205 | ○ |
| Comparative Example 46 | | | 360 | 5.0 | 0.14 | -658 | X |
| Comparative Example 47 | | | 400 | 4 | 0.12 | -675 | X |
| Comparative Example 48 | | | | 5 | 0.15 | -685 | X |
| Comparative Example 49 | | | | 6 | 0.18 | -680 | X |
| Comparative Example 50 | | | | 7 | 0.21 | -689 | X |
| Comparative Example 51 | | | 460 | 5.0 | 0.17 | -680 | X |
| Comparative Example 52 | | | 560 | 5.0 | 0.21 | -695 | X |
| Comparative Example 53 | | | 660 | 5.0 | 0.25 | -679 | X |
| Comparative Example 54 | Single optical fiber laser | 52 | - | 5.0 | 0.22 | -115 | ⊚ |
| Comparative Example 55 | | 62 | | 5.0 | 0.26 | -725 | X |
| Comparative Example 56 | | 72 | | 5.0 | 0.30 | -745 | X |
| Comparative Example 57 | | 82 | | 5.0 | 0.34 | -755 | X |
| Comparative Example 58 | | 96 | | 4 | 0.32 | -840 | X |
| Comparative Example 59 | | 96 | | 5 | 0.40 | -810 | X |
| Comparative Example 60 | | | | 6 | 0.48 | -815 | X |
| Comparative Example 61 | | | | 7 | 0.56 | -830 | X |
| Comparative Example 62 | | 150 | | 5.0 | 0.63 | -850 | X |

If output values of the lasers are the same in a state in which a thickness of the steel sheet is 0.2 mm and irradiation intervals of the overlapping lasers are the same as 5 mm as shown in Table 2, it may be seen that the iron loss improvement rate by the overlapping lasers of Experiment 2 is significantly improved compared with the single optical fiber laser of Comparative Example 8 and the single CO₂ laser of Comparative Example 2.

As may be seen in Table 2, the iron loss improvement rate of Comparative Example 4 in which an output value of the single CO₂ laser is significantly increased to 400 W that is greater than an output value (260 W) of the CO₂ laser of the overlapping lasers is lower than those of Experiments 1 to 5 in which an output value is small and the iron loss improvement rate of Comparative Example 13 in which an output of the optical fiber laser is increased is lower than those of Experiments 1 to 4.

As may be seen in Table 3, even when a thickness of the steel sheet is 0.23 mm and the irradiation interval of the overlapping lasers is changed to 4 mm, 5 mm, 6 mm, or 7 mm, the iron loss improvement rate is greatly improved in each experimental example in which the overlapping lasers according to the present disclosure are irradiated for each irradiation interval.

As may be seen in Table 2, Comparative Examples 2 to 7 that are the single CO₂ laser have a very poor iron loss improvement rate and an output (or an output power) (e.g., 200 to 500 W) within a range of the present disclosure but have a slightly good corrosion characteristic as in Comparative Example 33 of Table 4. Comparative Example 6 and Comparative Example 7 that are the single CO₂ laser are out of an output value of the present disclosure (e.g., 500 W or more) but have a low iron loss improvement rate and a very poor corrosion characteristic as in Comparative Example 37 and Comparative Example 38 of Table 4.

Comparative Examples 9 to 13 that are the single optical fiber laser in Table 2 have a very poor iron loss improvement rate in an output (e.g., 10 to 150 W) within a range of the present disclosure, and have a poor corrosion characteristic as in Comparative Examples 40 to 44 of Table 4.

However, Comparative Example 8 of Table 2 in which an output of the single optical fiber laser is low (e.g. the output of the single optical fiber laser is 52 W) has a significantly low iron loss improvement rate but has a good corrosion characteristic as in Comparative Example 39 of Table 4.

The trend is similar to the single CO₂ laser and the single optical fiber laser of Table 3 that is an experimental result for the steel sheet with a thickness of 0.23 mm as in Table 5.

Comparative Example 1 of Table 2 in which heterogeneous lasers are sequentially overlapped has a poor iron loss improvement rate.

As may be seen in Table 4 and Table 5, a result of measuring the natural corrosion potential value may show that the electrical steel sheet with a thickness of 0.20 mm or 0.23 mm exhibits the following characteristic.

That is, when the CO₂ laser is irradiated alone and the output is increased to 400 W or more in which the iron loss improvement rate is relatively high, the measured natural corrosion potential value may be low (e.g., the measured natural corrosion potential value may be -650 mV or less) so that the corrosion characteristic is not good.

When the optical fiber laser is irradiated alone and the iron loss improvement rate is increased to 72 W or more that is an output that may secure a certain degree of the iron loss improvement rate, the natural corrosion potential value may be low (e.g., the natural corrosion potential value may be -700 mV or less) so that the corrosion characteristic is not good.

However, if the optical fiber laser and the CO₂ laser are overlapped to be irradiated, the iron loss improvement rate may be sufficiently secured, and the natural corrosion potential value may be sufficiently secured so that the corrosion characteristic is excellent.

In Comparative Example 39 and Comparative Example 54 in which the optical fiber laser is irradiated alone, the natural corrosion potential value is -120 mV or more so that resistance to the corrosion is increased. The result may be seen in Comparative Example 33 and Comparative Example 45 in which the CO₂ laser is irradiated alone in the output of 260 W.

The present disclosure is not limited to the embodiments, may be manufactured in various different forms, and a person of ordinary skill in the art to which the present disclosure belongs will be able to understand that the present disclosure may be implemented in other specific forms without changing the technical idea or essential feature of the present disclosure. Therefore, it should be understood that the embodiments described above are illustrative and not limited in all respects.

## Claims

1. A method for refining a magnetic domain of a grain-oriented electrical steel sheet, comprising forming a deformation portion by irradiating overlapping laser beams to a surface of the electrical steel sheet,
wherein the overlapping laser beams includes a first beam spot formed by irradiating a first laser beam with a first wavelength and a second beam spot formed by irradiating a second laser beam with a second wavelength and the overlapping laser beams are formed by controlling the first beam spot so that some or all of the first beam spot are disposed inside the second beam spot.

2. The method of claim 1, wherein a first laser of the overlapping laser beams is a short-wavelength laser and a second laser is a long-wavelength laser having a wavelength longer than a wavelength of the short-wavelength laser.

3. The method of claim 2, wherein the overlapping laser beams in which that the first laser and the second laser simultaneously overlaps are irradiated to the surface of the electrical steel sheet with second recrystallization in a direction perpendicular or inclined to a rolling direction to form a deformation portion having a linear shape.

4. The method of claim 2, wherein a beam shape of each of the first laser and the second laser is one of an elliptical shape and a circular shape.

5. The method of claim 2, wherein the first laser is one of an optical fiber laser, a YAG laser, and a disk laser, and the second laser is a CO₂ laser.

6. The method of claim 5, wherein a beam spot of the optical fiber laser that is the first laser has a width of 10 to 200 µm and a length of less than or equal to a length of a beam spot of the CO₂ laser and has the elliptical shape or the circular shape.

7. The method of claim 5, wherein a beam spot of the CO₂ laser that is the second laser has a width of 100 to 400 µm and a length of 0.4 to 20 mm and has the elliptical shape.

8. The method of claim 1, wherein an irradiation interval of the overlapping laser beams is 2 to 10 mm and a scanning speed of the overlapping laser beams is 0.1 to 300 m/sec.

9. The method of claim 3, wherein an inclination direction of the overlapping laser beams is ±10° or less.

10. The method of claim 5, wherein an output of the optical fiber laser that is the first laser is 10 to 150 W, an output of the YAG laser is 10 to 250 W, and an output of the CO₂ laser that is the second laser is 200 to 500 W.

11. A grain-oriented electrical steel sheet, comprising:
an electrical steel sheet substrate; and
an insulating film layer that is disposed on the electrical steel sheet substrate,
wherein at least one deformation portion having a linear shape is formed on a surface of the electrical steel sheet substrate, and a natural corrosion potential value of the electrical steel sheet is -350 mV or more.

12. The grain-oriented electrical steel sheet of claim 11, wherein a glass film layer is formed between the electrical steel sheet substrate and the insulating film layer.

13. The grain-oriented electrical steel sheet of claim 11, wherein the natural corrosion potential value of the electric steel sheet is -50 to -300 mV.

14. The grain-oriented electrical steel sheet of claim 11, wherein a re-solidification layer is formed on a surface of the insulating film layer.

15. The grain-oriented electrical steel sheet of claim 14, wherein a thickness of the re-solidification layer is within 20% of a cross-sectional thickness of the insulating film layer.

16. The grain-oriented electrical steel sheet of claim 11, wherein a W15/50 iron loss improvement rate of the electrical steel sheet is 6% or more.

17. The grain-oriented electrical steel sheet of claim 11, wherein a W17/50 iron loss improvement rate of the electrical steel sheet is 9% or more.

18. A grain-oriented electrical steel sheet, comprising:
an electrical steel sheet substrate; and
an insulating film layer that is disposed on the electrical steel sheet substrate,
Wherein at least one deformation portion having a linear shape is formed on a surface of the electrical steel sheet, and a re-solidification layer is formed on a surface of the insulating film layer above the deformation portion having the linear shape.

19. The grain-oriented electrical steel sheet of claim 18, wherein a glass film layer is formed between the electrical steel sheet substrate and the insulating film layer.

20. The grain-oriented electrical steel sheet of claim 18, wherein a thickness of the insulating film layer above the deformation portion having the linear shape is 60% or more of a thickness of the insulating film layer above a region where the deformation portion is not formed.

21. The grain-oriented electrical steel sheet of claim 18, wherein the re-solidification layer includes silicon oxide as a primary component and the insulating film layer includes phosphate or colloidal silica as primary components.

22. The grain-oriented electrical steel sheet of claim 18, wherein a thickness of the re-solidification layer is within 20% of a cross-sectional thickness of the insulating film layer.
